# EUROPÄISCHE PATENTSCHRIFT

(11) **EP 0 478 989 B1**
(45) Veröffentlichungstag und Bekanntmachung des Hinweises auf die Patenterteilung: **21.08.1996**
(21) Anmeldenummer: 91115169.4
(22) Anmeldetag: 07.09.1991
(51) Int. Cl.: G11B 7/125, G11B 7/00

(54) **Verfahren zum Auslesen optischer Speicherplatten**
Method of reading optical discs
Procédé de lecture de disques optiques

(30) Priorität: 01.10.1990 DE 4030970
(43) Veröffentlichungstag der Anmeldung: 08.04.1992
(73) Patentinhaber: Blaupunkt-Werke GmbH, D-31132 Hildesheim (DE)
(72) Erfinder:

(56) Entgegenhaltungen:
- GB-A- 1 462 791
- JP-A-16 113 458
- PATENT ABSTRACTS OF JAPAN vol. 14, no. 551 (P-1139)(4494) 7. Dezember 1990 & JP-A- 02 235 224 ( FUJITSU LTD ) 18. September 1990
- PATENT ABSTRACTS OF JAPAN vol. 11, no. 181 (P-585)(2628) 11. Juni 1987 & JP-A- 62 009 535 ( TOSHIBA CORP ) 17. Januar 1987
- PATENT ABSTRACTS OF JAPAN vol. 13, no. 203 (P-870)(3551) 15. Mai 1989 & JP-A- 01 023 425 ( CANON INC ) 26. Januar 1989
- PATENT ABSTRACTS OF JAPAN vol. 14, no. 185 (P-1036)(4128) 13. April 1990 & JP-A- 02 031 341 ( OLYMPUS OPTICAL CO LTD ) 1. Februar 1990

## Beschreibung

Gegenstand des Schutzrechts ist ein Verfahren zum Auslesen von Daten aus den Spuren einer optischen Speicherplatte und ein Gerät hierfür.

Der Erfindung liegt die Aufgabe zugrunde, die Betriebsdauer von Laserdioden in den Abtastköpfen solcher Geräte zu verlängern.

Bei den bekannten Geräten zum Auslesen von optischen Speicherplatten befindet sich im Abtastkopf eine Monitordiode, die den Lichtstrom, den die Laserdiode abgibt, mißt. Mit Hilfe einer Regelstufe wird der Lichtstrom einem Soll-Wert nachgeführt und damit auf konstanter Größe gehalten. Es ist aus JP-A- 2 235 224 bekannt, die Lichteistung eines Lasers in einem Abspielgerät für optische Platten während einer Nichtlesebetriebs art so zu verringern, daß die Fokus - und Spurverfolgungssteuerung nicht gestört ist.

Die jeweils im Anspruch 1 und 4 aufgeführten Merkmale der Erfindung dienen der Lösung der eingangs genannten Aufgabe.

Damit wird bei der Erfindung die Leistungreduzierung auch während des Lesens von Steuerzeichen durchgeführt.

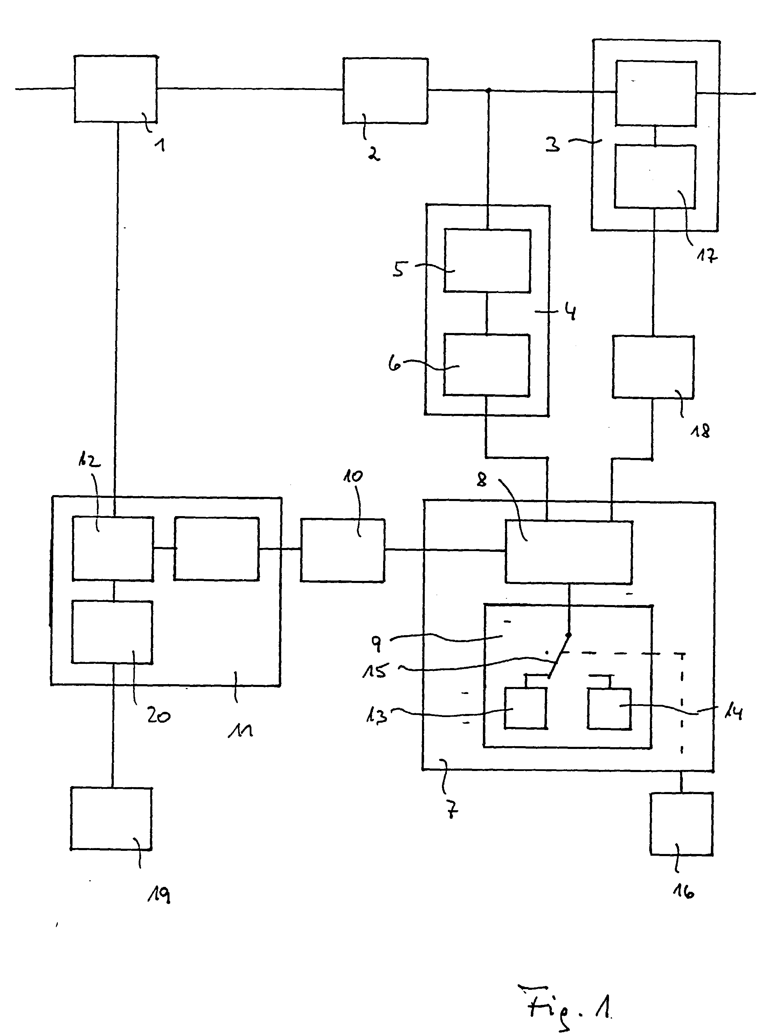

Anhand eines in Figur 1 dargestellten Schaltbildes wird die Erfindung näher erläutert.

Die einzelnen Spuren auf einer nicht dargestellten optischen Speicherplatte werden mittels eines in einem Optical Pick-Up (OPU) genannten Abtastkopf 1 angeordnete Laserdiode beleuchtet. Das von der Spur reflektierte Licht wird mittels Fotoelementen gemessen und diese erzeugen ein hochfrequentes elektrisches Ausgangssignal im Frequenzbereich von 196 kHz bis 720 kHz, das am Ausgang des Abtastkopfes 1 abgreifbar ist und im Vorverstärker 2 verstärkt wird. Dieses Signal ist in seiner Phase pulsweise moduliert. Die Modulation wird in dem Datendecoder 3 ausgewertet.

Bei der Aufzeichnung eines Musikstückes oder anderer Daten in den Spuren einer optischen Speicherplatte sind in regelmäßigen zeitlichen Abständen Steuerdaten in die Nutzinformation eingefügt. Aufgrund der unterschiedlichen Verschlüsselung lassen sich diese Steuerdaten beim Lesen der optischen Speicherplatte eindeutig von den Nutzinformationen trennen. Das für die Verschlüsselung der Steuerdaten gewählte Verfahren erlaubt es, diese mit einer geringeren Laserleistung zu lesen als die Nutzinformation.

Für die Verwendung der optischen Speicherplatte ist jedoch die fehlerfreie Abtastung der Nutzinformationen von größter Bedeutung. Die Messung der Lichtleistung der Laserdiode trägt dieser Bedeutung Rechnung.

Da bei der Auswertung der Steuerdaten auch Lesefehler zulässig sind, die die Fehlerschranke für die Nutzinformationen erheblich überschreiten, ohne daß die Steuerung außer Tritt fällt, folgerte der Erfinder, daß man bei dem Lesen der Spuren auf der optischen Speicherplatte mit einer gegenüber der bisher üblichen Lichtleistung verringerten Lichtleistung der Laserdiode arbeiten kann, solange nur der Inhalt der Steuerdaten ausgewertet wird.

Der zeitweise Betrieb der Laserdiode mit einer geringeren Lichtleistung verlängert aber deren Lebensdauer erheblich. Ein häufiges Anheben und Absenken der Lichtleistung verursacht dagegen keinen Abfall der Lebensdauer der Laserdiode.

Zur Regelung der Lichtleistung der Laserdiode wird das Ausgangssignal des Vorverstärkers 2 über einen Umformer 4, der eine Gleichrichterstufe 5 und einen AD-Wandler 6 umfaßt, in eine Regelstufe 7 eingegeben. Die HF-Amplitude des Ausgangssignals des Vorverstärkers 2 ist ein Maß für die momentane Lichtleistung der Laserdiode. In der Regelstufe 7 vergleicht eine Vergleichsstufe 8 den am AD-Wandlerausgang anstehenden Wert mit in einem Speicher 9 abgelegten Soll-Werten, die bei der Herstellung des Gerätes oder bei einem Austausch der Laserdiode jeweils individuell ermittelt werden. Das Augangssignal der Vergleichsstufe 8 steuert über einen DA-Wandler 10 einen Laserdriver 11, der eine Begrenzerstufe 12 umfaßt. Der Laserdriver bestimmt die Lichtleistung, welche die Laserdiode im Abtastkopf 1 abgibt.

Im Ausführungsbeispiel der Erfindung sind im Speicher 9 zwei Speicherzellen 13 und 14 vorgesehen, die über einen Umschalter 15 mit dem Speicherausgang verbindbar sind. Der Umschalter 15 wird von einem Betriebsartenumschalter 16 des Gerätes gesteuert, der nicht näher dargestellt ist und mit dem verschiedene Betriebsstellungen, wie beispielsweise: Einlegen einer neuen Speicherplatte in das Gerät,eingebbar sind. Zu dieser Betriebsstellung gehört das Lesen der Einlaufspur.

Erfordert die gewählte Betriebsart, wie zum Beispiel die erwähnte, nur das Auslesen von Steuerdaten, für das eine geringere Laserleistung ausreicht, dann ist die Speicherzelle, die den geringeren Soll-Wert ausgibt, mit dem Speicherausgang verbunden. In der Betriebsart "Wiedergabe des Nutzsignals" wird dagegen der höhere Soll-Wert ausgegeben.

Bei dem beschriebenen Ausführungsbeispiel der Erfindung wird abweichend von dem Stand der Technik das Signal für den Ist-Wert der Lichtleistung der Laserdiode nicht von einer im Abtastkopf angeordneten Monitordiode abgenommen, sondern aus dem HF-Pegel der ausgelesenen Signale hergeleitet. Die Einstellung unterschiedlicher Soll-Werte ist jedoch an die Herleitung des Ist-Wertes der Lichtleistung aus dem HF-Pegel nicht gebunden, sondern kann auch bei den sonst üblichen Regelungen der Lichtleistung, zum Beispiel mit der Monitordiode, zur Anwendung kommen. Denn entscheidend ist, daß eine ausreichend sichere Erkennung von Steuerdaten auch bei einer Verringerung des Lichtstroms gegenüber den bisher für erforderlich gehaltenen Soll-Werten gewährleistet ist und eine Absenkung des Lichtstroms während der Betriebsarten, die nur die Steuerdaten auswerten, für die Lösung der Eingangs genannten Aufgabe von Vorteil ist.

Da nicht alle optischen Speicherplatten aus derselben Fertigungsstätte kommen, ist mit Unterschieden im Reflektionsgrad des Laserstrahls an der Speicherplatte zu rechnen. Gute Speicherplatten haben einen hohen Reflektionsfaktor und lassen sich mit einer geringeren Lichtleistung der Laserdiode lesen als Speicherplatten geringerer Güte.

Wie bereits erwähnt, wird die HF-Amplitude des Ausgangssignals des HF-Vorverstärkers 2 in dem Datendecoder 3 ausgewertet. Zur Auswertung der Schaltung gehört auch ein Fehlerratendiskriminator 17. In diesem wird eine Fehlerrate festgestellt, die bei der Decodierung der Nutzinformationen im HF-Signal auftritt. Im Ausführungsbeispiel der Erfindung ist ein Ausgang des Fehlerratendiskriminators 17, an dem sich ein Maß für die Fehlerrate abgreifen läßt, über einen Umformer 18 mit einem weiteren Eingang der Regelstufe 7 verbunden.

Verringert sich nach dem Einlegen einer neuen Speicherplatte in den Spieler die Fehlerrate beim Decodieren, dann liegt die Ursache dafür in einem besseren Reflektionsgrad der neuen optischen Speicherplatte. Zur sicheren Erkennung der Nutzinformation kann gegebenenfalls nun eine geringere Lichtleistung der Laserdiode ausreichend sein. Damit läßt sich aus der Höhe der Fehlerrate ein Maß für die erforderliche Lichtleistung der Laserdiode ableiten. Da die Zusammenhänge eindeutig sind, ist diese Charakteristik in einem Umformer 18 gespeichert.

Die Lebensdauer einer Laserdiode wird in stärkerem Maße von der betriebseigenen Temperatur bestimmt, die nicht nur von der abgegebenen Lichtleistung abhängt, sondern auch von der Umgebungstemperatur mitbestimmt wird. CD-Spieler, die in Kraftfahrzeugen eingebaut sind, können bei recht unterschiedlichen Umgebungstemperaturen eingeschaltet werden. Auch die dem Abtastkopf 1 nachgeschalteten Verstärkerstufen haben eine temperaturabhängige Ausgangsleistung, so daß sich bei tiefen Temperaturen die Störspannungsleistung stark erhöht. Dies führt zu einer höheren Fehlerrate im Datendecoder 3.

In dem Ausführungsbeispiel bewirkt die Erhöhung der Fehlerrate automatisch eine Erhöhung der Lichtleistung der Laserdiode. Um die jeweilige Laserdiode vor der Zerstörung durch eine zu hoch abgeforderte Lichtleistung zu schützen, wird die Schwelle in der Begrenzerstufe 12 ebenfalls während der Justage des Gerätes im Verlauf der Fertigung entsprechend den Daten des Exemplars der Laserdiode eingestellt. Auch wenn die Fehlerrate durch zu tiefe Betriebstemperaturen verursacht wird, dann begrenzt normalerweise der Laserdriver den Anstieg der Lichtleistung auf das bei normalen Temperaturen zulässige Maß. Im Ausführungsbeispiel ist nun ein Temperaturfühler 19 vorgesehen, der unterhalb einer Schwelltemperatur ein Steuersignal an ein Zeitglied 20 abgibt und dieses einschaltet. Während der Standzeit des Zeitgliedes 20 wird die Begrenzungsschwelle im Laserdriver angehoben. Auch diese höhere Schwelle wird bei der Herstellung des Gerätes festgelegt.

Es ist davon auszugehen, daß die Fehlerrate im Datendecoder 3 während der Standzeit des Zeitgliedes 20, wenn diese angemessen gewählt ist, auf normale Werte zurückgegangen ist.

## Patentansprüche

1. Verfahren zum Auslesen von Daten aus den Spuren einer optischen Speicherplatte, in der verschlüsselte Steuerdaten und Nutzinformationen blockweise ineinandergeschachtelt sind, mit einer Regelung der Lichtleistung der Laserdiose unterhalb eines Schwellwertes durch Vergleich des Ist-Wertes der Lichtleistung mit einem Soll-Wert, dadurch gekennzeichnet, daß der Soll-Wert während einer Betriebsart, in der nur die Steuerdaten ausgewertet werden, abgesenkt wird.

2. Verfahren nach Anspruch 1, dadurch gekennzeichnet, daß der Ist-Wert des HF-Pegels des Ausgangssignals des Abtastkopfes erfaßt wird und damit die Einstellung der Lichtleistung erfolgt.

3. Verfahren nach Anspruch 1 oder 2, dadurch gekennzeichnet, daß das Fehlerratensignal des Datendecoders erfaßt wird und damit die Einstellung der Lichtleistung erfolgt.

4. Abspielgerät für ein optische Speicherplatte mit einer Laserdiode und einer dieser nachgeschalteten Regelstufe (7), die unterhalb eines Schwellwertes den Ist-Wert der Lichtleistung der Laserdiode einem Soll-Wert nachführt, und mit einem Umschalter (16) für die Betriebsarten, dadurch gekennzeichnet, daß der Soll-Wert mit dem Umschalter (16) bei Einstellung einer Betriebsart, in der nur auf der Speicherplatte gespeicherte mit der Nutzinformation verschachtelte verschlüsselte Steuerdaten ausgewertet werden, abgesenkt ist.

5. Abspielgerät nach Anspruch 4, dadurch gekennzeichnet, daß eine Meßstufe den HF-Pegel des Ausgangssignals des Abtastkopfes (1) auswertet und deren Ausgang über einen Umformer mit dem Ist-Wert-Eingang in der Regelstufe (7) verbunden ist.

6. Abspielgerät nach Anspruch 4 oder 5, dadurch gekennzeichnet, daß der Umformer eine Gleichrichterstufe (5) und einen DA-Wandler (6) umfaßt.

7. Abspielgerät nach einem der Ansprüche 4 bis 6, dadurch gekennzeichnet, daß ein Ausgang des Fehlerratendiskriminators (17) über einen Umformer (18) mit dem Ist-Wert-Eingang der Regelstufe verbunden ist.

8. Abspielgerät nach Anspruch 7, dadurch gekennzeichnet, daß in dem Umformer eine Regelcharakteristik für die Umsetzung einer Datenfehlerrate in eine zugeordnete Lichtleistung der Laserdiode abgelegt ist.

## Claims

1. Method for reading out data from the tracks of an optical storage disc, in which encoded control data and useful information are interleaved in blocks, with regulation of the optical power of the laser diode to below a threshold value by comparison of the actual value of the optical power with a setpoint value, characterized in that the setpoint value is reduced during a mode of operation in which only the control data are evaluated.

2. Method according to Claim 1, characterized in that the actual value of the RF level of the output signal of the scanning head is registered and the optical power is thereby adjusted.

3. Method according to Claim 1 or 2, characterized in that the error-rate signal of the data decoder is registered and the optical power is thereby adjusted.

4. Reading or playing device for an optical storage disc, having a laser diode and, connected downstream thereof, a control stage (7) which, below a threshold value, slaves the actual value of the optical power of the laser diode to a setpoint value, and having a change-over switch (16) for the modes of operation, characterized in that the setpoint value is reduced using the change-over switch (16) when selecting a mode of operation in which only encoded control data, stored on the optical disc and interleaved with the useful information, are evaluated.

5. Reading or playing device according to Claim 4, characterized in that a measuring stage evaluates the RF level of the output signal of the scanning head (1) and has its output connected via a converter to the actual-value input of the control stage (7).

6. Reading or playing device according to Claim 4 or 5, characterized in that the converter comprises a rectifier stage (5) and a D/A converter (6).

7. Reading or playing device according to one of Claims 4 to 6, characterized in that an output of the error-rate discriminator (7) is connected via a converter (18) to the actual-value input of the control stage.

8. Reading or playing device according to Claim 7, characterized in that a control characteristic for the conversion of a data-error rate into an assigned optical power of the laser diode is recorded in the converter.

## Revendications

1. Procédé de lecture de données sur les pistes d'un disque optique comportant une imbrication par blocs de données de commande codées et d'informations utiles, comprenant une régulation de la puissance lumineuse de la diode laser en dessous d'un seuil, par comparaison de la valeur réelle de la puissance lumineuse à une valeur de consigne,
caractérisé en ce que
- pendant un mode de fonctionnement, on abaisse la valeur de consigne telle que seules les valeurs de commande sont exploitées.

2. Procédé selon la revendication 1,
caractérisé en ce qu'
- on détecte la valeur réelle du niveau HF du signal de sortie de la tête de détection, et on règle ainsi la puissance optique.

3. Procédé selon la revendication 1 ou 2,
caractérisé en ce qu'
- on détecte le signal de taux d'erreurs du décodeur de données, et on règle ainsi la puissance lumineuse.

4. Appareil de lecture de disques optiques, muni d'une diode laser suivie d'un étage de régulation (7) qui asservit la valeur réelle de la puissance lumineuse de la diode laser sur une valeur de consigne en dessous d'un seuil, et d'un commutateur (16) des modes de fonctionnement,
caractérisé en ce que
- la valeur de consigne est abaissée par le commutateur (16) réglant un mode de fonctionnement au cours duquel le disque est seulement exploité pour les données de commande enregistrées de manière codée et combinées avec les informations utiles.

5. Appareil de lecture selon la revendication 4,
caractérisé en ce qu'
- un étage de mesure exploite le niveau HF du signal de sortie de la tête de détection (1), et sa sortie est reliée par un convertisseur à l'entrée de valeur réelle de l'étage de régulation (7).

6. Appareil de lecture selon les revendications 4 ou 5,
caractérisé en ce que
- le convertisseur comprend un étage-redresseur (5) et un convertisseur numérique/analogique (6).

7. Appareil de lecture selon l'une quelconque des revendications 4 à 6,
caractérisé en ce qu'
- une sortie du discriminateur de taux d'erreurs (17) est reliée par un convertisseur (18) à l'entrée de valeur réelle de l'étage de régulation.

8. Appareil de lecture selon la revendication 7, caractérisé en ce que
- dans le convertisseur est enregistrée une caractéristique de régulation pour la conversion d'un taux d'erreurs de données en une puissance lumineuse associée de la diode laser.
